# EUROPÄISCHE PATENTSCHRIFT

(11) **EP 4 225 962 B1**
(45) Veröffentlichungstag und Bekanntmachung des Hinweises auf die Patenterteilung: **28.01.2026**
(21) Anmeldenummer: 21807006.8
(22) Anmeldetag: 04.11.2021
(51) Int. Cl.: C23C 10/20, C23C 10/60, C23C 10/30, C23C 10/32, C09D 1/00

(54) **CHROM(VI)-FREIER SCHLICKER FÜR DIE DIFFUSIONSBESCHICHTUNG**
CR-FREE SLURRY FOR DIFFUSION COATING
SUSPENSION SANS CR POUR RÉALISER UN REVÊTEMENT DE DIFFUSION

(30) Priorität: 22.12.2020 DE 102020134671
(43) Veröffentlichungstag der Anmeldung: 16.08.2023
(73) Patentinhaber: M-M-Morant-GmbH, 83233 Bernau (DE)
(72) Erfinder: RUHL, Alexander, 83233 Bernau (DE); MORANT, Max, 83233 Bernau (DE)
(74) Vertreter: Lorenz Seidler Gossel Part. mbB
(86) Internationale Anmeldenummer: PCT/EP2021/080581
(87) Internationale Veröffentlichungsnummer: WO 2022/135777

(56) Entgegenhaltungen:
- EP-A1- 1 983 074
- WO-A1-2013/149606
- WO-A1-2013/149609
- US-A1- 2016 230 263

## Beschreibung

Die vorliegende Anmeldung betrifft eine lagerfähige Schlicker-Zusammensetzung für die Diffusionsbeschichtung von Metallen.

Eine Diffusionsbeschichtung von Metallbauteilen wird zum oberflächlichen Schutz der Bauteile vor Umwelteinflüssen wie insbesondere Hochtemperaturkorrosion eingesetzt. Im Rahmen der Diffusionsbeschichtung wird ein oxidbildendes sogenanntes Diffusionsmetall auf die Oberfläche des Metallbauteils aufgetragen und die Oberfläche sodann durch Temperatureinwirkung behandelt, damit das Diffusionsmetall in den oberflächennahen Bereich des Substratmaterials des Bauteils eindiffundiert. Am weitesten verbreitet ist die Anwendung von Aluminium als oxidbildendes Diffusionsmetall, es kommen je nach Substratmaterial aber auch andere oxidbildende Metalle wie beispielsweise Nickel, Chrom, Mangan, Germanium, Silizium, Magnesium, Zinn, Titan und Zink, oder auch entsprechende Metalllegierungen wie beispielsweise Chrom-Aluminium-Legierungen oder Mischungen zur Anwendung. Im Falle des Einsatzes von Legierungen oder Mischungen stehen in der Diffusionsschicht mehrere Oxidbildner zur Verfügung.

Um das Diffusionsmetall auf die Substratoberfläche aufzubringen sind unterschiedliche Verfahren bekannt geworden. Am weitesten verbreitet sind das sogenannte Packzementier-Verfahren, bei dem das Diffusionsmetall aus der Gasphase an die Substratoberfläche abgeschieden wird, und das sogenannte Schlickerverfahren.

Im Rahmen des hier interessierenden Schlickerverfahrens wird eine flüssige Suspension eines Metallpulvers, das auch Mischungen mehrerer Metalle oder Legierungen beinhalten kann, als Diffusionsmetall und eines Bindemittels, der sogenannte Schlicker, auf die Substratoberfläche aufgetragen, z. B. anhand von Pinseln, Sprühen, Tauchen oder Foliengießen. Im Anschluss erfolgen ein Trocknungsschritt zur Entfernung des Lösungsmittels der Suspension sowie ein thermischer Diffusionsprozess. Zum Erreichen einer bestimmten Trockenschichtdicke kann die Auftragung des Schlickers mehrmals erfolgen.

Das Bindemittel dient dazu, nach Auftragung des Schlickers die Partikel des Diffusionsmetalls auf dem Substrat zu fixieren. In handelsüblichen Schlickern werden häufig Chrom(VI)-haltige saure Phosphatbinder verwendet, die an der Oberfläche des Substrats ein Polyphosphat-Netzwerk bilden, in dem die Partikel des Diffusionsmetalls immobilisiert sind. Vorteilhaft sind Chrom(VI)-haltige Materialien deshalb, weil sie einerseits das oxidationsempfindliche Diffusionsmetall sowie ggf. die Substratoberfläche passivieren und so vor einem Angriff durch die Säure des sauren Phosphatbinders schützen, und weil sie andererseits die Ausbildung eines keramikartigen und temperaturstabilen Polyphosphat-Netzwerks an der Substratoberfläche fördern.

Wegen der krebserregenden Eigenschaften sollte vom Einsatz von Chrom(VI)-Salzen aber Abstand genommen werden. Auch der Einsatz alternativer hochoxidierter Schwermetallsalze ist aus Gründen des Arbeits- und Umweltschutzes unerwünscht.

Chrom(VI)-freie Beschichtungszusammensetzungen werden beispielsweise in der US 2016/230263 A1, der EP 1 983 074 A1, der WO 2013/149609 A1 oder der WO 2013/149606 A1 offenbart.

Da in Abwesenheit der Chrom(VI)-Salze oder vergleichbarer hochoxidierter Schwermetallsalze aber der saure Phosphatbinder das oxidationsempfindliche Diffusionsmetall sowie ggf. die Substratoberfläche angreifen würde, wurden im Stand der Technik unterschiedliche alternative Formulierungen entwickelt. In diesem Zusammenhang können kommerziell erhältliche Zusammensetzungen auf der Grundlage organischer Polymerbinder genannt werden, die aber aufgrund der fehlenden Hitzestabilität am Substrat gegenüber den Phosphaten signifikante Nachteile haben, da die Binder bei Hitze verbrennen, wodurch die Metallpartikel freiliegen und abdampfen oder als Schmelze verlaufen können. Auch Systeme auf der Grundlage organischer Lösungsmittel wurden versucht, wobei sich hierbei in der Anwendung diverse Probleme ergeben, da bei einem mehrschichtigen Auftrag die untere Schicht immer wieder angelöst wurde und die Trocknungseigenschaften nicht ideal waren, weshalb nur sehr dünne Schichten aufgetragen werden konnten und der Vorgang zum Erreichen sinnvoller Schichtdicken sehr oft wiederholt werden musste. Davon abgesehen ist der Einsatz organischer Lösungsmittel generell aus Gründen des Umwelt- und Arbeitsschutzes unerwünscht.

Aufgabe der Erfindung ist es, einen Schlicker für die Diffusionsbeschichtung aufzufinden, der die genannten Anforderungen im Bereich des Gesundheits- und Umweltschutzes erfüllt und gleichzeitig hervorragende Arbeitsergebnisse erzielt.

Vor diesem Hintergrund betrifft die Erfindung einen Kit zur Herstellung einer Chrom(IV)-freien Schlickersuspension für die Diffusionsbeschichtung von Metalloberflächen, wobei der Kit als getrennte Komponenten eine Pulvermischung und eine Bindermischung umfasst, die zur Herstellung der Schlickersuspension vereinigt werden sollen, wobei die Pulvermischung ein pulverförmiges Diffusionsmetall aufweist, wobei die Bindermischung ein wässriges Lösungsmittel und einen Phosphatbinder aufweist, und wobei sowohl die Pulvermischung als auch die Bindermischung frei von Chrom(VI)-Salzen sind.

Das technische Problem wird also erfindungsgemäß durch Verwendung eines Systems mit zumindest zwei Komponenten gelöst, wobei es sich bei einer Komponente um eine Bindermischung und bei der anderen Komponente um eine für den jeweiligen Verwendungszweck angepasste Pulvermischung handelt.

Zum Erhalt der Schlickersuspension werden die Pulvermischung und die Bindermischung vor einer Applikation vermischt und homogenisiert. Die fertige Schlickersuspension enthält das wässrige Lösungsmittel sowie darin suspendiert das pulverförmige Diffusionsmetall und den Phosphatbinder. Sie ist frei von Chrom(VI)-Salzen, die nach der REACH-Verordnung als besonders besorgniserregender Stoff (SVHC, Substance of Very High Concern) eingestuft sind.

Das Produkt wird als Mehrkomponentensystem, insbesondere 2-Komponentensystem bereitgestellt und ist somit trotz der in einem Chrom(VI)-freien Ansatz inhärenten Reaktivität des sauren Phosphatbinders gegenüber den oxidierbaren Diffusionsmetallpulvern lagerstabil. Es kommt zu keiner Entwicklung von Wasserstoffgas und auch unter diesem Gesichtspunkt wird eine Explosionsgefahr vermieden.

Die Pulvermischung liegt trocken vor, also als trockenes Pulver. Bei der Bindermischung handelt es sich um eine flüssige Mischung.

Die aus den Phosphatbindern resultierende keramische Schicht bindet die Diffusionsmetall-Partikel auf der Substratoberfläche und hält durch ihre Härte einer gewissen mechanischen Belastung, beispielsweise einer mechanischen Einwirkung währen eines Transports stand. Dies steht im Gegensatz zu Ansätzen mit organischen Lösemitteln oder Polymerbindern, beispielsweise Polyurethanbindern, die im Stand der Technik teilweise versucht wurden, wie eingangs erwähnt. Beim Diffusionsprozess selbst führt die glasartige keramische Bindermatrix dazu, dass geschmolzenes Metall nicht verläuft und Tropfen bildet oder verdampft, wodurch die Gefahr inhomogener Schichtdicken verringert wird. Die glasartige keramische Matrix ermöglicht auch die Zugabe von Katalysatoren, die wie die Metalle beim Aufheizvorgang eingeschlossen sind und nicht unmittelbar abdampfen, sondern die Reaktion beschleunigen können. Letztlich wird die keramische Matrix durch Verarmung an den verbrauchten Metallpulvern porös und kann nach Erkalten der behandelten Oberfläche mechanisch entfernt werden, beispielsweise durch Sandstrahlen. Durch das Fehlen von Chrom(VI)-Salzen bilden sich keine Chrom(VI)-haltigen Stäube.

Ferner ist die Schlickersuspension wasserbasiert und frei von flüchtigen organischen Lösungsmitteln, wodurch eine Gesundheitsgefahr ebenso entfällt, wie eine Explosionsgefahr und die Notwendigkeit von umständlichen Vorkehrungen wie etwa Absauganlagen oder Umluftöfen bei der Trocknung. Durch den wasserbasierten Ansatz kann der Schlicker auf der Substratoberfläche in kurzer Zeit an der Luft trocknen und neigt nicht zum Verlaufen. Nach der Trocknung bzw. einem initialen Einbrennen bei niedriger Temperatur ist der Auftrag einer weiteren Lage möglich, um höhere Schichtdicken zu erreichen. Die aus den Phosphatbindern resultierende keramische Schicht wird vom Auftrag weiterer Schichten nicht negativ beeinflusst oder aufgelöst und verläuft nicht. Durch das sehr gute Trocknungsverhalten des Systems können im Vergleich zu bekannten lösemittelbasierten Systemen schneller dickere Schichten aufgetragen werden, wodurch die für den Prozess nötigen Schichtdicken bereits in zwei bis vier und insbesondere in zwei bis drei anstatt beispielsweise sieben Arbeitsgängen erreicht werden. Dies ermöglicht deutliche Einsparungen bei der Beschichtung und ermöglicht deutlich höhere Durchsätze.

Die Bindermischung ist in Zusammensetzung und pH-Wert derart formuliert, dass es auch nach Kombination mit der Pulvermischung zu keinen unmittelbaren Ätzreaktionen an den Diffusionsmetallpulvern kommt.

Der pH-Wert der Bindermischung liegt bei pH 2.3 bis pH 2.9, insbesondere bei pH 2.5 bis pH 2.7. In diesem Bereich ist beispielsweise fein verteiltes Aluminiumpulver für mehrere Stunden bis Tage stabil.

Das Lösungsmittel der Bindermischung ist Wasser oder ein wässriges Lösungsmittel, beispielsweise eine wässrige Alkoholmischung, mit einem Wasseranteil von mindestens 80 Vol.-%.

Der Lösungsmittel- bzw. Wasseranteil der Bindermischung liegt bei 40 bis 80 Gew.-% gemessen am Gesamtgewicht der Bindermischung. Der Lösungsmittelanteil kann nicht nur Einfluss auf die Reaktivität der Bindermischung gegenüber den Diffusionsmetallpulvern haben, sondern es kann über den Lösungsmittelanteil der Bindermischung auch die Viskosität des fertigen Schlickers eingestellt werden.

Der Phosphatbinder der Bindermischung umfasst saure Monohydrogen- oder Dihydrogenphosphate von wenigstens einem Kation der Gruppe Aluminium, Magnesium oder Zink. Dieser kann aus Phosphorsäure und Aluminium-, Magnesium- und/oder Zink-Salzen oder aus Rohstoffen wie Al(H₂PO₄)₃, Zn(H₂PO₄)₂ und Mg(H₂PO₄)₂ hergestellt werden. Besonders bevorzugt ist, dass der Phosphatbinder Anteile von größer 10-50%, oder bevorzugt 20-30% an Al[H₂PO₄]₃ umfasst. Beispielsweise können zwei oder drei der genannten Kationen als Gegenionen der sauren Phosphate im Phosphatbinder vorhanden sein. Diese Kationen stabilisieren die Mischung gegen eine Gelbildung. Der relative Anteil der Phosphorsäure, der sauren Monohydrogen- oder Dihydrogenphosphate oder der basischen Phosphate steht in Wechselwirkung mit dem pH-Wert.

Der Anteil des Phosphatbinders innerhalb der Bindermischung, im Sinne von kumulierten Gewichtsanteilen der Phosphorsäure bzw. von Phosphorsäureanionen ohne Gegenionen, liegt vorzugsweise zwischen 5 und 40%, weiter vorzugsweise zwischen 10 und 30%.

Bei dem Diffusionsmetall handelt es sich um ein Metall aus der Gruppe Aluminium, Nickel, Chrom, oder Silizium oder eine Metalllegierung aus der Gruppe der Aluminium-Nickel-Legierungen oder der Aluminium-Chrom-Legierungen.

Bevorzugt ist die Verwendung unbehandelter Metallpulver. Durch den 2K-Ansatz der vorliegenden Erfindung kann eine gute Haltbarkeit der Zusammensetzungen auch ohne Cr(VI) und ohne eine teure Präparierung der Pulver durch z.B. Beschichtung erreicht werden. Unbehandelt heißt im gegebenen Kontext, dass die Metallpulver einfach als Metallpulver vorliegen und keiner Behandlung zu beispielsweise deren Beschichtung unterzogen sind. Ein Aluminiumpulver wird selbstverständlich eine Oxidschicht an der Metalloberfläche aufweisen, aber diese Schicht bildet sich ohne eine spezielle Behandlung einfach unter normaler Handhabung an der Luft. Grundsätzlich können auch Mischpulver wie Aluminiumpulver und Siliziumpulver in Mischung eingesetzt werden, wobei gemäß der vorliegenden Ausführungsform zumindest eines und vorzugsweise alle der Pulvertypen der Mischung unbehandelt sind.

Alternativ kann aber auch zur weiteren Inhibierung der Metallpulver ein beschichtetes Pulver eingesetzt werden, beispielsweise ein mit Siliziumoxid SiOₓ (x=1-2) beschichtetes Pulver.

Sofern beispielsweise eine Aluminierung durchgeführt werden soll (wobei dieser Begriff hier stellvertretend auch für eine Alonisierung oder Alitierung verwendet wird), enthält die Pulvermischung metallisches Aluminiumpulver, das entweder unbehandelt oder durch beispielsweise SiO₂-Coating stabilisiert sein kann. Des Weiteren kann die Pulvermischung in einem solchen Fall zusätzlich auch metallisches Siliziumpulver enthalten. Mischungen aus Aluminium- und Siliziumpulvern können in einer Ausführungsform bevorzugt sein.

Sofern eine Nickel-Aluminierung der Substratoberfläche durchgeführt werden soll, wird gegenüber der eben beschriebenen Pulvermischung ein Teil des Aluminiumpulvers durch Nickelpulver ersetzt, oder es kann, ausschließlich oder als Teilersatz des Aluminiumpulvers, ein Pulver einer Nickel-Aluminium-Legierung wie beispielsweise NiAl₃ oder Ni-Al 95-5 zum Einsatz kommen.

Sofern eine Chrom-Aluminierung der Substratoberfläche durchgeführt werden soll, wird gegenüber der eben beschriebenen Pulvermischung ein Teil des Aluminiumpulvers durch Chrompulver ersetzt, oder es kann, ausschließlich oder als Teilersatz des Aluminiumpulvers, ein Pulver einer Chrom-Aluminium-Legierung zum Einsatz kommen.

Sofern eine Chromierung der Substratoberfläche durchgeführt werden soll, enthält die Pulvermischung metallisches Chrompulver, das entweder unbehandelt oder durch beispielsweise SiO₂-Coating stabilisiert sein kann.

Generell ist bevorzugt, dass die Pulvermischung auch einen Katalysator enthält, der vorzugsweise wasserunlöslich und fein verteilt sein kann, dass er wie die Metallpulver beim Aufheizvorgang in die Bindermatrix eingeschlossen wird und nicht unmittelbar abdampfen kann, sondern den Diffusionsprozess beschleunigen kann. Vorzugsweise handelt es sich um ein wasserunlösliches Halogensalz eines auch als Diffusionsmetall zum Einsatz kommenden Metalls. Beispiele umfassen AlF₃, AlF₃x3H₂O und CrCl₃, wobei AlF₃ oder AlF₃x3H₂O insbesondere im Rahmen einer Aluminierung oder kombinierten Aluminierung zum Einsatz kommen können, also wenn zumindest ein Teil der Diffusionsmetallpulver aus Aluminium oder einer Aluminium-haltigen Legierung besteht, und wobei CrCl₃ insbesondere im Rahmen einer Chromierung oder kombinierten Chromierung zum Einsatz kommen können, also wenn zumindest ein Teil der Diffusionsmetallpulver aus Chrom oder einer Chrom-haltigen Legierung besteht.

Als weiteren Bestandteil kann die Pulvermischung in einer Ausführungsform einen vorzugsweise wasserunlöslichen Farbstoff oder ein Pigment zur Farbgebung umfassen. Ein geeignetes Beispiel stellt etwa blauer Kobalt-Aluminat-Spinell dar.

Weiterhin können der Pulvermischung inerte Pulver wie beispielsweise Al₂O₃ zur Erhöhung der Korrosionsbeständigkeit zugegeben werden.

Die Bindermischung oder die Pulvermischung können weiterhin ein Antiabsetzmittel, ein Thixotropiermittel, ein Verdicker oder Mischungen daraus enthalten.

Prozessual ist vorgesehen, dass in einem ersten Anwendungsschritt die Pulvermischung mit der Bindermischung vereinigt und homogenisiert wird, um die Schlickersuspension zu erhalten. Diese Schlickersuspension wird dann auf die Substratoberfläche appliziert, wobei darauf zu achten ist, dass es zu keinem Verlaufen kommt. Nach Trocknung an Luft kann auf die Beschichtung eine weitere Schicht appliziert werden, welche erneut getrocknet wird. Auf diese Weise ist es möglich, für dicke Diffusionsschichten ausreichend hohe Grünlingsdicken zu erzielen.

Zur Lagerung vor dem eigentlichen Diffusionsprozess wird die Beschichtung für etwa 5-60 Minuten, insbesondere für 10-30 Minuten bei einer Temperatur von größer 50°C, vorzugsweise 100°C bis 150°C gehärtet. Beispielsweise kann das Härten bei einer Temperatur von etwa 120°C erfolgen.

Der eigentliche Diffusionsprozess wird je nach Substratmaterial und Diffusionsmetall typischerweise bei Temperaturen von größer 500°C, vorzugsweise zwischen 880°C bis 1150°C für mehrere Stunden durchgeführt. Man spricht von der sogenannten Haltezeit. Vorteilhaft kann dabei die Verwendung von Prozessgasen wie Argon oder Wasserstoff mit geringer Spülrate sein. Zur Beschleunigung der Diffusionsreaktion kann ein Katalysator, wie er bereits oben erwähnt wurde, also beispielsweise NH₄F, NH₄Cl, AlF₃ oder AlF₃*3H₂O, zusätzlich in den Reaktor gegeben werden.

Optional kann eine Endpunktbestimmung für die Reaktion erfolgen, beispielsweise durch optische Auswertung von Querschliffen oder durch EDX-Analyse in einem Rasterelektronenmikroskop bestimmt.

Bevorzugte Anwendungsbereiche des erfindungsgemäßen Kits bzw. der daraus generierten Schlickersuspensionen und des Verfahrens umfassen eine Erhöhung der Korrosionsbeständigkeit von metallischen Bauteilen für die Luftfahrtindustrie, die Energieindustrie, die Automobilindustrie, die Ölindustrie, die metallverarbeitende Industrie sowie die maritime Industrie.

Weitere Einzelheiten und Vorteile der Erfindung ergeben sich aus den nachfolgend beschriebenen Ausführungsbeispielen und Figuren. In den Figuren zeigen:
- Figur 1:: eine schematische Darstellung der Aluminierung einer Oberfläche unter Verwendung einer mit einem erfindungsgemäßen Kit hergestellten Schlickersuspension; und
- Figur 2:: eine schematische Darstellung der Aluminierung einer Oberfläche unter Verwendung einer Cr(VI)-freien Schlickersuspension auf Basis von organischen Bindemitteln aus dem Stand der Technik.

### Beispiel 1: Zusammensetzung einer niedrig-viskosen Bindermischung

Eine niedrig-viskose Bindermischung kann in einem Ausführungsbeispiel durch Mischen der folgenden Bestandteile erhalten werden.

| **Bestandteil** | **Bereich bevorzugt** | **Bereich allgemein** |
|---|---|---|
| Wasser | 60 - 80 Gew.-% | 50 - 90 Gew.-% |
| Phosphorsäure | 15 - 30 Gew.-% | 10 - 40 Gew.-% |
| Aluminiumhydroxid | 3 - 9 Gew.-% | 1 - 10 Gew.-% |
| Magnesiumhydroxid | 1 - 3 Gew.-% | 1 - 5 Gew.-% |
| Zinkoxid | 1 - 4 Gew.-% | 1 - 5 Gew.-% |

| Zusätzlich: LiOH, NaOH, KOH, Ca(OH)₂, Ba(OH)₂ | < 1 Gew.-% | < 2 Gew.-% |
|---|---|---|
| pH | 2,3-2,6 | 2,3 - 2,9 |

### Beispiel 2: Zusammensetzung einer viskosen Bindermischung

Eine viskose Bindermischung kann in einem Ausführungsbeispiel durch Mischen der folgenden Bestandteile erhalten werden.

| **Bestandteil** | **Bereich bevorzugt** | **Bereich allgemein** |
|---|---|---|
| Wasser | 40 - 60 Gew.-% | 30 - 70 Gew.-% |
| Phosphorsäure | 30 - 40 Gew.-% | 20 - 50 Gew.-% |
| Aluminiumhydroxid | 5 - 15 Gew.-% | 1 - 20 Gew.-% |
| Magnesiumhydroxid | 1 - 3 Gew.-% | 1 - 5 Gew.-% |
| Zinkoxid | 2 - 5 Gew.-% | 1 - 5 Gew.-% |
| Zusätzlich: LiOH, NaOH, KOH, Ca(OH)₂, Ba(OH)₂ | < 1 Gew.-% | < 2 Gew.-% |
| pH | 2,3-2,6 | 2.3 - 2,9 |

### Beispiel 3: Zusammensetzung einer Pulvermischung für die Aluminierung

Eine Pulvermischung für die Aluminierung kann in einem Ausführungsbeispiel durch Mischen der folgenden Bestandteile erhalten werden.

| | |
|---|---|
| Aluminiumpulver mit / ohne SiO₂ | 80-100 Gew.-% |
| Siliziumpulver | 0-15 Gew.-% |
| AlF₃x3H₂O (nach Bedarf) / AlF₃ | 0-5 Gew.-% |

### Beispiel 4: Zusammensetzung einer Pulvermischung für die Chromierung

Eine Pulvermischung für die Chromierung kann in einem Ausführungsbeispiel durch Mischen der folgenden Bestandteile erhalten werden.

| | |
|---|---|
| Chrompulver | 95-100 Gew.-% |
| CrCl₃ | 0-5 Gew.-% |

### Beispiel 5a: Zusammensetzung einer Pulvermischung für die Chrom-Aluminierung

Eine Pulvermischung für die Chrom-Aluminierung kann in einem Ausführungsbeispiel durch Mischen der folgenden Bestandteile erhalten werden.

| | |
|---|---|
| CrAl-Legierung z.B. CrAl 50/50 | 95-100 Gew.-% |
| CrCl₃ / AlF₃x3H₂O / AlF₃ | 0-5 Gew.-% |

### Beispiel 5b: Zusammensetzung einer Pulvermischung für die Chrom-Aluminierung

Eine alternative Pulvermischung für die Chrom-Aluminierung kann in einem Ausführungsbeispiel durch Mischen der folgenden Bestandteile erhalten werden.

| | |
|---|---|
| Chrompulver | 35-60 Gew.-% |
| Aluminiumpulver | 35-60 Gew.-% |
| CrCl₃ / AlF₃x3H₂O / AlF₃ | 0-5 Gew.-% |

### Beispiel 6a: Zusammensetzung einer Pulvermischung für die Nickel-Aluminierung

Eine Pulvermischung für die Nickel-Aluminierung kann in einem Ausführungsbeispiel durch Mischen der folgenden Bestandteile erhalten werden.

| | |
|---|---|
| NiAl-Legierung z.B. NiAl 50/50 | 95-100 Gew.-% |
| NiCl₃ / AlF₃x3H₂O / AlF₃ | 0-5 Gew.-% |

### Beispiel 6b: Zusammensetzung einer Pulvermischung für die Nickel-Aluminierung

Eine alternative Pulvermischung für die Nickel-Aluminierung kann in einem Ausführungsbeispiel durch Mischen der folgenden Bestandteile erhalten werden.

| | |
|---|---|
| Nickelpulver | 35-60 Gew.-% |
| Aluminiumpulver | 35-60 Gew.-% |
| NiCl₃ / AlF₃x3H₂O / AlF₃ | 0-5 Gew.-% |

### Beispiel 7: Schlickersuspension für die Aluminierung

Eine Schlickersuspension für die Aluminierung kann in einem Ausführungsbeispiel durch Mischen der folgenden beiden Bestandteile eines Kits erhalten werden.

| **Bestandteil** | **Bereich bevorzugt** | **Bereich allgemein** |
|---|---|---|
| Bindermischung Beispiel 1 | 50 - 60 Gew.-% | 40 - 70 Gew.-% |
| Pulvermischung Beispiel 3 | 40 - 50 Gew.-% | 30 - 60 Gew.-% |

### Beispiel 8: Schlickersuspension für die Chromierung

Eine Schlickersuspension für die Chromierung kann in einem Ausführungsbeispiel durch Mischen der folgenden beiden Bestandteile eines Kits erhalten werden.

| **Bestandteil** | **Bereich bevorzugt** | **Bereich allgemein** |
|---|---|---|
| Bindermischung Beispiel 2 | 40 - 50 Gew.-% | 30 - 60 Gew.-% |
| Pulvermischung Beispiel 4 | 50 - 60 Gew.-% | 40 - 70 Gew.-% |

### Beispiel 9: Schlickersuspension für die Chrom-Aluminierung

Eine Schlickersuspension für die Chrom-Aluminierung kann in einem Ausführungsbeispiel durch Mischen der folgenden beiden Bestandteile eines Kits erhalten werden.

| | |
|---|---|
| Bindermischung Beispiel 2 | 40 - 50 Gew.-% |
| Pulvermischung Beispiel 5a oder 5b | 50 - 60 Gew.-% |

### Beispiel 10: Schlickersuspension für die Nickel-Aluminierung

Eine Schlickersuspension für die Nickel-Aluminierung kann in einem Ausführungsbeispiel durch Mischen der folgenden beiden Bestandteile eines Kits erhalten werden.

| | |
|---|---|
| Bindermischung Beispiel 2 | 40 - 50 Gew.-% |
| Pulvermischung Beispiel 6a oder 6b | 50 - 60 Gew.-% |

### Anwendungsbeispiel 11: Herstellung einer Diffusionsschicht (Aluminierung)

Das Produkt gemäß Beispiel 7 wird durch Einwiegen und Mischen der Bindermischung und der Pulvermischung zubereitet. Das Mischen kann durch Schütteln oder Rühren erfolgen.

Die erhaltene Schlickersuspension wird auf ein entfettetes und mit Korund (120 bis 220 mesh) gestrahltes Basismaterial MAR M247 mit einer Spritzpistole (Düsendurchmesser 0,8-1,0 mm; 1,5 - 2,0 bar) aufgespritzt und getrocknet. Der Vorgang wird je nach zu erreichender Schichtdicke des Grünlings 1-2 mal wiederholt und anschließend für 30 min bei 120°C gehärtet. Bei einer Schichtdicke von 100 - 200 µm können Diffusionschichten mit einer Dicke von 30 - 80 µm erzielt werden.

Die Diffusionsbehandlung erfolgt in einem Ofen unter Argon oder Wasserstoffatmosphäre bei 880°C für 4h Haltezeit. Nach Abkühlen der Bauteile kann die verbleibende Ascheschicht durch Strahlen mit Glasperlen entfernt werden. Durch Verwendung der beschriebenen Mischung wurde bei einer Grünlingsdicke von 150 µm eine homogene Diffusionsschicht mit Dicke 70 µm erzielt.

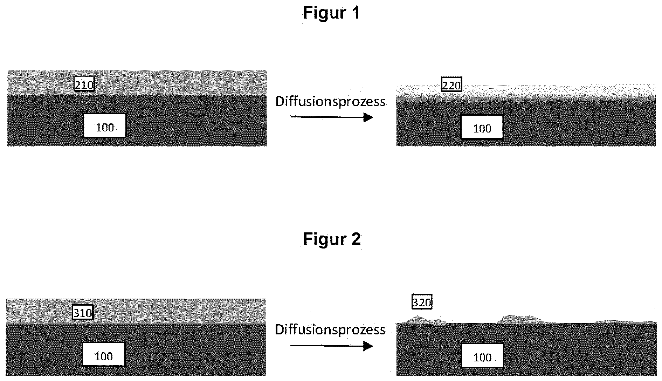

Das Ergebnis ist in Figur 1 schematisch dargestellt, wobei das Bezugszeichen 100 das Basismaterial, das Bezugszeichen 210 den Grünling und das Bezugszeichen 220 die Diffusionsschicht kennzeichnen.

Die Metallurgie eines Querschnitts mittels EDX-Analyse im REM ergab ein Masseverhältnis von 25%/7% Aluminium zu Silizium in der Diffusionsschicht.

### Vergleichsbeispiel 12: Herstellung einer Diffusionsschicht (Aluminierung)

Eine Anwendung einer Cr(VI)-freien Schlickersuspension auf der Grundlage eines organischen Bindemittels, wie es aus dem Stand der Technik bekannt ist, führt typischerweise nicht zu einer homogenen Diffusionsschicht, sondern zu einer unterbrochenen Schicht mit Fehlstellen wie Löchern. Zudem kommt es zu einer Verarmung und zur Bildung von Droplets (Aluminium-Perlen). Dies kann auf das Fehlen der Phosphatmatrix im organischen System zurückgeführt werden.

Ein beispielhaftes Ergebnis ist in Figur 2 schematisch dargestellt, wobei das Bezugszeichen 100 das Basismaterial, das Bezugszeichen 310 den Grünling und das Bezugszeichen 320 die Droplets kennzeichnen.

### Anwendungsbeispiel 13: Herstellung einer Diffusionsschicht (Chromierung)

Das Produkt gemäß Beispiel 8 wird durch Einwiegen und Mischen der Bindermischung und der Pulvermischung zubereitet. Das Mischen kann durch Schütteln oder Rühren erfolgen.

Die erhaltene Schlickersuspension wird auf ein entfettetes und mit Korund (120 bis 220 mesh) gestrahltes Basismaterial wie einen austenitischen Stahl oder eine Nickelbasislegierung mit einer Spritzpistole (Düsendurchmesser 0,8-1,0 mm; 1,5 - 2,0 bar) aufgespritzt und getrocknet. Der Vorgang wird je nach zu erreichender Schichtdicke des Grünlings 1-2 mal wiederholt und anschließend für 30 min bei 120°C gehärtet. Bei einer Schichtdicke von 100 - 150 µm können Diffusionschichten mit einer Dicke von 30 - 70 µm erzielt werden.

Die Diffusionsbehandlung erfolgt in einem Ofen unter Argon oder Wasserstoffatmosphäre bei 1000° - 1150°C für 4-10 Stunden Haltezeit. Die Reaktionsgeschwindigkeit und die finale Dicke der Diffusionsschicht kann durch Zugabe von Katalysatoren wie NH₄Cl, NH₄F oder AlF₃ deutlich erhöht werden.

Nach Abkühlen der Bauteile kann die verbleibende Ascheschicht durch Strahlen mit Glasperlen entfernt werden.

Durch Verwendung der beschriebenen Mischung wurde bei einer Grünlingsdicke von 50 µm eine homogene Diffusionsschicht mit Dicke 25 µm erzielt.

Die Metallurgie eines Querschnitts mittels EDX-Analyse im REM ergab eine Erhöhung des Chromgehalts in der Diffusionsschicht bis auf maximal 60-70%.

## Patentansprüche

1. Kit zur Herstellung einer Chrom(VI)-freien Schlickersuspension für die Diffusionsbeschichtung von Metalloberflächen, wobei der Kit als getrennte Komponenten eine Pulvermischung und eine flüssige Bindermischung umfasst, die zur Herstellung der Schlickersuspension vereinigt werden sollen,
wobei die Pulvermischung als trockenes Pulver vorliegt und ein pulverförmiges Diffusionsmetall aufweist, wobei es sich bei dem Diffusionsmetall um ein Metall aus der Gruppe Aluminium, Silizium, Nickel oder Chrom oder einer Metalllegierung aus der Gruppe der Aluminium-Nickel-Legierungen oder der Aluminium-Chrom-Legierungen handelt;
wobei die Bindermischung ein wässriges Lösungsmittel und einen Phosphatbinder aufweist, wobei der Phosphatbinder Hydrogen- oder Dihydrogenphosphate von wenigstens einem Kation der Gruppe Aluminium, Zink oder Magnesium enthält, wobei es sich bei dem Lösungsmittel der Bindermischung um Wasser oder ein wässriges Lösungsmittel mit einem Wasseranteil von mindestens 80 Vol.-% handelt, wobei der Lösungsmittelanteil der Bindermischung gemessen an deren Gesamtgewicht bei 40 bis 80 Gew.-% liegt, wobei der Anteil des Phosphatbinders innerhalb der Bindermischung, im Sinne von kumulierten Gewichtsanteilen der Phosphorsäure bzw. von Phosphorsäureanionen ohne Gegenionen, zwischen 5 und 40% liegt, und wobei der pH-Wert der Bindermischung bei pH 2.3 bis pH 2.9 liegt; und
wobei sowohl die Pulvermischung als auch die Bindermischung frei von Chrom(VI)-Salzen sind.

2. Kit nach Anspruch 1, **dadurch gekennzeichnet, dass** der Kit als Zwei-Komponenten-System vorliegt, dessen eine Komponente durch die Pulvermischung und dessen andere Komponente durch die Bindermischung gebildet wird.

3. Kit nach einem der vorhergehenden Ansprüche, **dadurch gekennzeichnet, dass** der pH-Wert der Bindermischung bei pH 2.5 bis pH 2.7 liegt.

4. Kit nach einem der vorhergehenden Ansprüche, **dadurch gekennzeichnet, dass** der Anteil des Phosphatbinders innerhalb der Bindermischung, im Sinne von kumulierten Gewichtsanteilen der Phosphorsäure bzw. von Phosphorsäureanionen ohne Gegenionen, zwischen 10 und 30% liegt.

5. Kit nach einem der vorhergehenden Ansprüche, **dadurch gekennzeichnet, dass** das Diffusionsmetall der Pulvermischung unbehandelt vorliegt.

6. Kit nach einem der vorhergehenden Ansprüche, **dadurch gekennzeichnet, dass** die Pulvermischung einen vorzugsweise wasserunlöslichen Katalysator enthält, bei dem es sich insbesondere um ein Halogenid eines auch als Diffusionsmetall zum Einsatz kommenden Metalls handelt.

7. Kit nach einem der vorhergehenden Ansprüche, **dadurch gekennzeichnet, dass** die Pulvermischung einen vorzugsweise wasserunlöslichen Farbstoff enthält.

8. Verfahren zur Diffusionsbeschichtung von Metalloberflächen eines Bauteils, umfassend die Schritte:
(i) Vereinigung der Pulvermischung und der Bindermischung eines Kits nach einem der vorhergehenden Ansprüche zu einer Chrom(VI)-freien Schlickersuspension;
(ii) Auftragen der Schlickersuspension auf die Metalloberfläche;
(iii) Trocknen der aufgetragenen Schlickersuspension durch Verdampfen des wässrigen Lösungsmittels der Bindermischung, um eine feste Bindermatrix mit darin verteilten Dispersionsmetallpartikeln an der Metalloberfläche zu erhalten; und
(iv) Erhitzen der mit der Bindermatrix versehenen Metalloberfläche auf Temperaturen von größer 500°C.

9. Verfahren nach Anspruch 8, **dadurch gekennzeichnet, dass** die Schritte (ii) und (iii) des Auftragens und der Trocknung mehrmals wiederholt werden, um eine mehrschichtige Bindermatrix an der Metalloberfläche zu erhalten, vorzugsweise zwei bis vier Mal und insbesondere zwei bis drei Mal.

10. Verfahren nach Anspruch 8 oder 9, **dadurch gekennzeichnet, dass** der Schritt (iii) der Trocknung eine Lagerung für 10-30 Minuten bei einer Temperatur von größer 50°C, vorzugsweise von 100°C bis 150°C umfasst.

11. Verwendung eines Kits nach einem der Ansprüche 1 bis 7 in der Luftfahrtindustrie, der Energieindustrie, der Automobilindustrie, der Ölindustrie, der metallverarbeitenden Industrie oder der maritimen Industrie.

## Claims

1. A kit for preparing a chromium(VI)-free slurry suspension for the diffusion coating of metal surfaces, the kit comprising, as separate components, a powder mixture and a liquid binder mixture, configured to be combined to obtain the slurry suspension,
wherein the powder mixture is a dry powder and comprises a diffusion metal powder, the diffusion metal is a metal selected from the group consisting of aluminum, silicium, nickel and chromium, or a metal alloy selected from the group consisting of aluminum-nickel and aluminum-chromium alloys;
wherein the binder mixture comprises an aqueous solvent and a phosphate binder, wherein the phosphate binder contains hydrogen or dihydrogen phosphates of at least one cation of the group aluminum, zinc or magnesium, wherein the solvent of the binder mixture is water or an aqueous solvent having a water content of at least 80% by volume, wherein the solvent content of the binder mixture, relative to its total weight, is from 40 to 80% by weight, wherein the weight fraction of the phosphate binder in the binder mixture, as expressed by the cumulative weight of phosphoric acid and phosphoric acid anions without counter-ions, is between 5 and 40%, and wherein the pH of the binder mixture is pH 2.3 to pH 2.9; and
wherein both the powder mixture and the binder mixture are free of chromium(VI) salts.

2. The kit according to claim 1, **characterized in that** the kit is a two-component system, one component being the powder mixture and the other component being the binder mixture.

3. The kit according to any one of the preceding claims, **characterized in that** the pH of the binder mixture is pH 2.5 to pH 2.7.

4. The kit according to any one of the preceding claims, **characterized in that** the weight fraction of the phosphate binder in the binder mixture, as expressed by the cumulative weight of phosphoric acid and phosphoric acid anions without counter-ions, is between 10 and 30%.

5. The kit according to any one of the preceding claims, **characterized in that** the diffusion metal of the powder mixture is untreated.

6. The kit according to any one of the preceding claims, **characterized in that** the powder mixture comprises a preferably water-insoluble catalyst, in particular a halide of a metal contained as diffusion metal.

7. The kit according to any one of the preceding claims, **characterized in that** the powder mixture comprises a preferably water-insoluble dye.

8. A method of diffusion coating a metal surface, comprising the steps of:
(i) combining the powder mixture and the binder mixture of a kit according to any one of the preceding claims to form a chromium(VI)-free slurry suspension;
(ii) applying the slurry suspension to the metal surface;
(iii) drying the applied slurry suspension by allowing the aqueous solvent of the binder mixture to evaporate, and to obtain a solid binder matrix on the metal surface, having particles of the diffusion metal powder dispersed therein; and
(iv) heating the binder matrix coated metal surface to temperatures of greater than 500°C.

9. The method according to claim 8, **characterized in that** steps (ii) and (iii) of application and drying are repeated several times, preferably two to four times and in particular two to three times, to obtain a multilayer binder matrix on the metal surface.

10. The method according to claim 8 or 9, **characterized in that** step (iii) of drying comprises treating for 10-30 minutes at a temperature greater than 50°C, preferably from 100°C to 150°C.

11. Use of a kit according to any one of the claims 1 to 7 in the aerospace industry, the energy industry, the automotive industry, the oil industry, the metalworking industry or the maritime industry.

## Revendications

1. Kit pour la fabrication d'une suspension de barbotine sans chrome (VI) pour le revêtement par diffusion de surfaces métalliques, où le kit comprend, en tant que composants séparés, un mélange de poudre et un mélange de liant liquide qui doivent être combinés pour fabriquer la suspension de barbotine,
où le mélange de poudre se présente sous forme de poudre sèche et présente un métal de diffusion pulvérulent, où le métal de diffusion consiste en un métal du groupe comprenant l'aluminium, le silicium, le nickel ou le chrome ou un alliage métallique du groupe des alliages aluminium-nickel ou des alliages aluminium-chrome ;
où le mélange de liant présente un solvant aqueux et un liant phosphate, où le liant phosphate contient des hydrogéno- ou dihydrogénophosphates d'au moins un cation du groupe comprenant l'aluminium, le zinc ou le magnésium, où le solvant du mélange de liant consiste en de l'eau ou un solvant aqueux ayant une teneur en eau d'au moins 80 % en volume, où la proportion de solvant du mélange de liant, mesurée par rapport à son poids total, est de 40 à 80 % en poids, où la proportion du liant phosphate dans le mélange de liant, au sens de proportions en poids cumulées de l'acide phosphorique ou des anions d'acide phosphorique sans contre-ions, est comprise entre 5 et 40 %, et où le pH du mélange de liant est situé de pH 2,3 à pH 2,9 ; et
où aussi bien le mélange de poudre que le mélange de liant est exempt de sels de chrome (VI).

2. Kit selon la revendication 1, **caractérisé en ce que** le kit se présente sous forme de système à deux composants, dont un composant est formé par le mélange de poudre et l'autre composant par le mélange de liant.

3. Kit selon l'une quelconque des revendications précédentes, **caractérisé en ce que** le pH du mélange de liant est situé de pH 2,5 à pH 2,7.

4. Kit selon l'une quelconque des revendications précédentes, **caractérisé en ce que** la proportion du liant phosphate dans le mélange de liant, au sens de proportions en poids cumulées de l'acide phosphorique ou d'anions d'acide phosphorique sans contre-ions, est comprise entre 10 et 30 %.

5. Kit selon l'une quelconque des revendications précédentes, **caractérisé en ce que** le métal de diffusion du mélange de poudre se présente à l'état non traité.

6. Kit selon l'une quelconque des revendications précédentes, **caractérisé en ce que** le mélange de poudre contient un catalyseur de préférence insoluble dans l'eau, qui consiste notamment en un halogénure d'un métal également utilisé en tant que métal de diffusion.

7. Kit selon l'une quelconque des revendications précédentes, **caractérisé en ce que** le mélange de poudre contient un colorant de préférence insoluble dans l'eau.

8. Procédé de revêtement par diffusion de surfaces métalliques d'un composant, comprenant les étapes suivantes :
(i) la combinaison du mélange de poudre et du mélange de liant d'un kit selon l'une quelconque des revendications précédentes en une suspension de barbotine sans chrome (VI) ;
(ii) l'application de la suspension de barbotine sur la surface métallique ;
(iii) le séchage de la suspension de barbotine appliquée par évaporation du solvant aqueux du mélange de liant afin d'obtenir une matrice de liant solide avec des particules de métal de dispersion réparties dedans sur la surface métallique ; et
(iv) le chauffage de la surface métallique pourvue de la matrice de liant à des températures supérieures à 500 °C.

9. Procédé selon la revendication 8, **caractérisé en ce que** les étapes (ii) et (iii) d'application et de séchage sont répétées plusieurs fois, de préférence deux à quatre fois et notamment deux à trois fois, afin d'obtenir une matrice de liant multicouche sur la surface métallique.

10. Procédé selon la revendication 8 ou 9, **caractérisé en ce que** l'étape (iii) de séchage comprend un stockage pendant 10 à 30 minutes à une température supérieure à 50 °C, de préférence de 100 °C à 150 °C.

11. Utilisation d'un kit selon l'une quelconque des revendications 1 à 7 dans l'industrie aéronautique, l'industrie énergétique, l'industrie automobile, l'industrie pétrolière, l'industrie métallurgique ou l'industrie maritime.
